# EUROPEAN PATENT APPLICATION

(11) **EP 2 409 572 A2**
(43) Date of publication of application: **25.01.2012**
(21) Application number: 11005965.6
(22) Date of filing: 21.07.2011
(51) Int. Cl.: A22B 5/20

(54) **Machine for extracting material classified as hazardous from the medullary canal of sheep and goats**

(30) Priority: 21.07.2010 ES 201031126
(71) Applicant: Extracción de Médulas y Complementos, S.L., 17459 Campllong Gerona (ES)
(72) Inventor: Catafau Riera, Jaume, 17459 Camplong Girona (ES)
(74) Representative: Maldonado Jordan, Julia

(57) **Abstract**

This machine comprises a vertical structure (1) carrying means for milling made up of a vertical cutter (4) associated to actuating means and with a milling cutter (41) on the lower side with a front attachment (42) to guide it inside the medullary canal. These actuating means comprise a first motor (21) connected to the cutter (4) to give it an axial rotation movement, and a second motor (22) for the vertical displacement of a carriage (2) carrying the first motor (21), on a frame (11) attached to the upper part of the structure (1), and which has, in its lower part, a cleaning case (5) for cleaning the cutter (4), the miller (41) and the front attachment (42).

## Description

### Object of the invention

The present invention refers to a machine for extracting material classified as hazardous from the medullary canal of sheep and goats. The machine is of the type that comprises means for milling with the possibility of vertical displacement for milling the medullary canal of the animal as it moves downwards through the interior of the medullary canal, as well as means that are adjustable in height and can be connected to the neck of the animal to hold it and to collect the specific risk material extracted from the medullary canal during the milling operation.

### Application field of the invention

The machine which is the object of the invention is applicable in abattoirs for extracting specified risk material, including the spinal medullar, the dura, nerve tissue and spinal ganglions, through milling in order to avoid transmission to consumers of the so-called bovine spongiform encephalopathy, commonly known as mad-cow disease.

### Antecedents of the invention

Different antecedents of machines and devices exist which aim to extract specified risk material (SRM) from livestock, especially bovine and ovine, from the medullary canal of the animal. These generally use a cable made up of one or more cutting elements, which is driven through the interior of the medullary canal, to clean the medullary canal through traction or a combined forward and rotational movement.

Specifically, in the French invention patent 0303103, a device is described that extracts SRM using a traction cable of inferior diameter to the spinal canal of the animal and which has multiple radial cutting edge blades, coaxial to the cable. This cable is operated by a traction mechanism with a geared motor drive and pulley, and at least one adapted idler sprocket to engage with the different blades of the cable, causing the cable to drag the spinal medullar and pachymeninx out when passing through the interior of the medullary canal.

This device presents the disadvantage that the cable places significant lateral pressure on the most curved parts of the spinal column of the animal and can cut or break the bone in different places.

Another disadvantage of this device is that, depending on the size of the animal, it can leave part of the dura and the start of the nerve tissue and spinal ganglions in some areas of the medullary canal, eliminating only partially the hazardous material, which can transmit the disease to consumers.

In the Spanish invention patent ES2195711, also by the holder of the present invention, a machine to extract bone marrow from the spinal column of animals is described using a system of emptying, and another using compressed air. This presents the disadvantage of not guaranteeing total extraction of all SRM and, especially the start of nerve tissue and the spinal ganglions, so it does not totally eliminate the risk of transmission of diseases to humans either.

In the invention patent ES2288072, also by the holder of this invention, a device is described for the simultaneous extraction of the spinal medullar, the dura, the start of nerve tissue and the spinal ganglions, from livestock of any kind. This device has a traction cable carrying protective clamps and increasing blades, and a second traction and rotation cable carrying a milling cutter and means of rapid attachment to connect it to the traction cable, as well as means for selectively operating the aforementioned cables for traction and for traction and rotation while extracting the spinal medullary.

This device enables milling of the medullary canal, guaranteeing the total extraction of the risk material. However, it presents a disadvantage as it uses two cables, which must be operated manually while introducing the traction cable into the medullary canal of the animal, and subsequently to connect the second cable for traction and rotation and attach it to the operating means that transmit the traction movements and combined traction and rotation movements respectively.

This device requires significant manual intervention by the operators and the continual substitution of cables to avoid the risk of cross-contamination in processing successive animals.

Similarly, it should be highlighted that this patent does not have adequate means of protection to prevent the cables coming into contact with the floor of the abattoir, which can increase the risk of contamination and lead to insufficient hygiene conditions.

In this section, it is important to highlight the existence of the invention patent ES2289924 by the holder of the present invention, which refers to improvements made to the aforementioned invention patent ES2288072.

In accordance with these improvements, the device includes a module to hold the animal without it swaying sideways, a module to compensate for vertical pressure produced by the animal's own weight and by the traction of the cable on the production line at the abattoir, an operating module which causes rotation of the cable carrying the milling cutters and longitudinal movement through the interior of the animal's medullary canal, and a module for steering the cable between the compensating module and the operating module.

The operating module comprises vertical guides on which there is a displacement carriage carrying a semi-circular guide made of rollers on which an intermediate area of the operating cable is placed. A motor-driven roller is set on top of these guides, which operates the displacement carriage through a traction cable or production line, causing it to be raised or lowered.

The module steering the cable between the compensating module and the operating module has an interior passage for housing the cable, avoiding contact with the floor and thereby improving the hygienic conditions of the device. However, as for the previous devices, considerable manual intervention by operators is required to operate the cables and for manual connection and disconnection. As well as involving great physical effort, this requires a significant amount of time to extract the hazardous material from the medullary canal of each of the animals.

In the aforementioned invention patent, it is also necessary to constantly replace the cables used for processing successive animals, and cleaning and disinfecting them externally to avoid the risk of cross-contamination by operators working the cables or due to the same cable coming into contact with successive animals.

All the aforementioned registers and documents refer to the element introduced into the medullary canal of the animal being a cable, which has to be held by both sides in order to operate and actuate it, and that these cables and milling cutters have to be taken apart following the extraction of the specific risk material, often manually. These configurations are complex, with many components and little prone to operating fully automatically. This leads to a long work cycle for each animal.

### Description of the invention

The machine for extracting hazardous material from the medullary canal of sheep and goats, the object of this invention, presents a series of technical particularities aimed at facilitating simpler, more automated construction, maintaining operating efficiency, and especially appropriate to the physical make-up of these animals.

The machine is therefore prepared for the extraction of SRM from the medullary canal of sheep and goats, taking advantage of the moderate size of this type of livestock compared to that of bovine livestock.

This machine is of the type that comprises a vertical structure carrying means for milling that can move vertically, for the milling of the medullary canal of the animal as it moves downwards through the inside of the medullary canal, along with means for collecting specific risk material, which can be attached to the animal's head to hold it in place and collect specific risk material from the medullary canal as the milling operation takes place.

In accordance with the invention, the means for milling comprise a vertical cutter associated to actuating means, with a milling cutter on the lower side, which has a front attachment to guide it inside the medullary canal. These actuating means for the cutter comprise a first motor connected to the cutter to give it an axial rotation movement, and a second motor for the vertical displacement of a carriage carrying the first motor, on a frame attached to the upper part of the structure.

This frame on the structure has, in its lower part, a case for cleaning the cutter as it moves downwards through the inside of this cleaning case.

In one use of the invention, the means for collecting the specified risk material, which can be connected to the animal's neck, comprise a cone for collecting material with pincers to hold the animal's neck. This is connected by suction means below to a network of suction, and associated to means for vertical displacement between an upper operative position and a lower cleaning position, in which it is placed inside a case for cleaning.

This case for cleaning is open below and its girth is appropriate for it to be attached to the outside of the cone that collects material in its lower position, and for surrounding high-pressure water jets to clean and eliminate the specific risk material. In the upper part of this case for cleaning, there is an elastic membrane with an opening, which can be attached to the animal's neck, along with the pincers, to avoid splashing.

Therefore, at no moment does the operator need to handle cables that connect and interconnect in order to operate the machine. Rather, in the work cycle, the animal arranged face up in the machine is treated in a fully automatic way through the cutter moving downwards with the milling cutter rotating at the end, for it to go through the medullary canal and the specified risk material to be collected. This entire operation is conducted automatically.

The lower case for cleaning carries out the cleaning of the cone and pincers automatically and efficiently, using the suction means to eliminate the water and the remains of the specific risk material.

The pincers that hold the neck of the animal to be treated are made up of two clamps set on the cone for collecting material. They are connected by means of an actuating cylinder, pneumatic or hydraulic, for closing and opening.

These clamps adapt easily to the girth of the neck of the animal, whatever the height of the neck, as the means which raise the cone for collecting material arrange the clamps in the appropriate place.

In one use, the cutter is made up of a hollow tube with holes in the side to project water supplied by a connection located in the upper part of the cutter, outwards. The aim is to clean the remains removed by the milling action as the milling cutter moves through the interior of the medullary canal. This ensures that the medullar, the dura and particles of milled bone are eliminated through the lower part of this medullary canal.

The cleaning case associated to the frame is made up of a receptacle with surrounding high-pressure water jets, aimed at the cutter, which passes through a lower collar at the base of the aforementioned receptacle. This base is tilted towards a side inlet, which is connected to a network of suction. In this way, as the cutter and milling cutter move upwards after the milling of the medullary canal, any remains that have stuck are cleaned so that the cutter and milling cutter are ready for the next cycle.

The elastic membrane is made in the same way as a funnel, with a central tubular sleeve facing inwards. In the resting position, this sleeve extends downwards, facilitating entry into the animal's neck, and it extends upwards when the means for collecting material are raised, more specifically the cone for collecting material with the pincers. In one use, the opening is made up of a cutting blade with tabs, which close the opening in a resting position. This membrane provides important advantages; the first is protection against splashing of specified risk material as the milling of the medullary canal takes place, and, secondly, it facilitates cleaning of the pincers and the cone for collecting material, by high-pressure jets of water which are also contained, protecting the operator and the area surrounding the machine from contamination.

The vertical structure presents in its upper area a place of passage and anchoring for the system for the industrial transportation of animals, such as the guide on which animals usually hang.

### Description of diagrams

To complete the description and facilitate understanding of the different features of the invention, the present descriptive report includes a set of illustrative but not limiting diagrams in which the following can be seen:
- Figure 1 shows a cross-section from above of the machine with the cutter and milling cutter housed in the frame, and the cone for collecting material in the lower position in the case for cleaning.

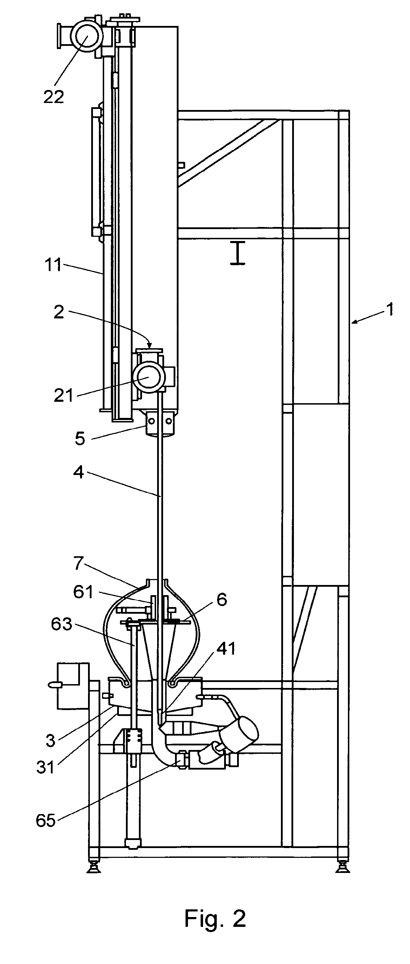

- Figure 2 shows a cross-section from above of the machine in an operating position, with the cutter lowered and the cone for collecting material raised.

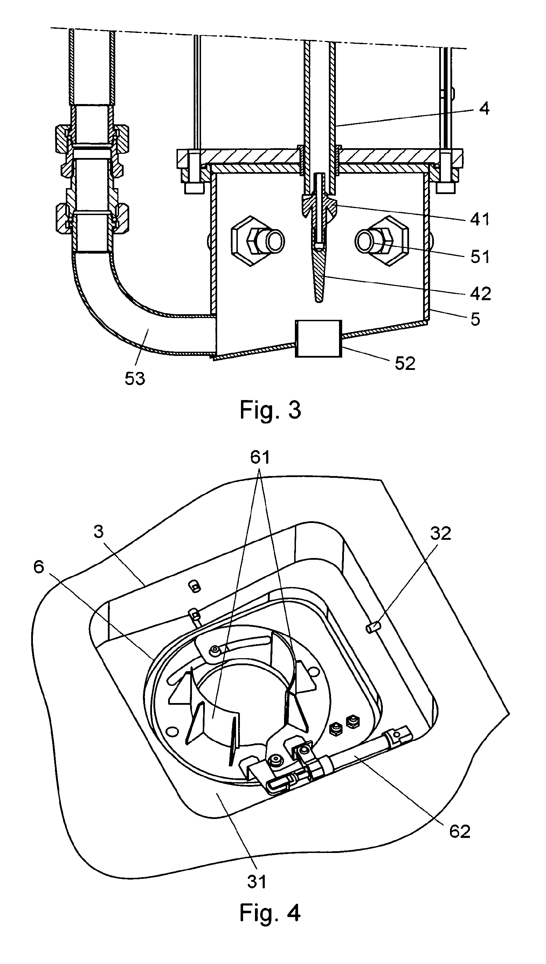

- Figure 3 shows a cross-section from above of the machine case for cleaning.
- Figure 4 shows a view of the case for cleaning without the elastic membrane, showing the cone for collecting material and the pincers in the lower position for their cleaning.
- Figure 5 shows a sideways cross-section from above of the elastic membrane.

### Preferential use for the invention

As can be seen in the figures referenced, the machine comprises a vertical structure (1) with an outer layer of protection and an area of passage and anchoring for the system for the industrial transportation of animals, which are attached by their legs in a vertical position, face up. The upper part of this vertical structure (1) comprises means for milling set on a carriage (2), which can be moved vertically, as in the lower part of the vertical structure (1) there is a case for cleaning (3) with means for collecting the specified risk material.

The means for milling are made up of a vertical cutter (4) associated to actuating means, with a milling cutter (41) on the lower side with a front attachment (42) to guide it through the interior of the medullary canal. In the example shown, the cutter (4) is made up of a hollow tube with holes in the side (not shown) for the water, supplied by an inlet on the upper side, to drain out.

The actuating means comprise a first motor (21) connected to the cutter (4) to give it an axial rotation movement, and a second motor (22) for the vertical displacement of a carriage (2) carrying the first motor (21) on a frame (11) attached to the upper part of the structure (1) which has, in its lower part, a cleaning case (5) for cleaning the cutter (4) as it passes through the inside of the aforementioned cleaning case (5).

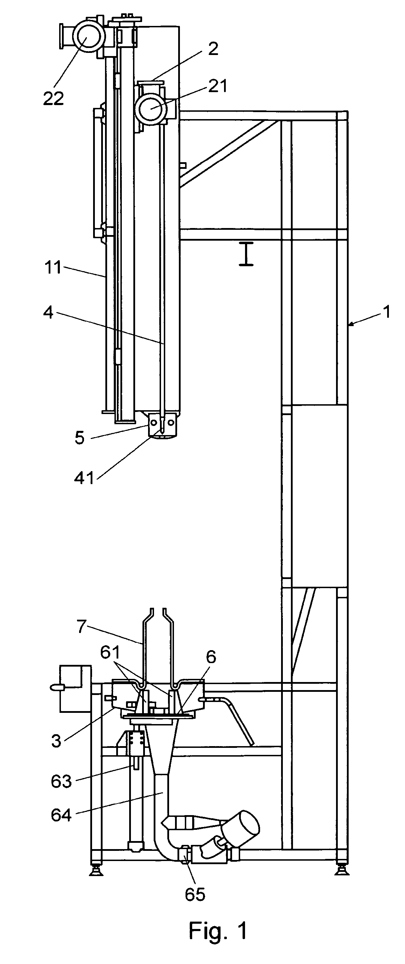

The frame (11) protects the cutter (4), the miller (41) and the front attachment (42) of the milling cutter when it is in the upper position shown in figure 1. Through the rotation and vertical displacement of the cutter (4) towards the lower area, the milling of the medullary canal of the animal is carried out.

In the lower part of the frame (11) there is a cleaning case (5) through the interior of which the cutter (4), milling cutter (41) and front attachment (42) pass as vertical displacement takes place.

This cleaning case (5) is made up of a receptacle with high-pressure water jets (51), arranged around the outside and aimed towards the interior of the aforementioned cleaning case.

This cleaning case (5) has a tilted base with a collar (52) through which pass the cutter (4), milling cutter (41) and front attachment (42) of the milling cutter, which passes through a lower collar (52) in the base of the receptacle and a side inlet (53) connected to a network of suction (not represented) to extract water and any remains of risk material from the cleaning.

The means for collecting specified risk material in the lower part of the structure comprise a cone (6) for collecting material with pincers to hold the neck of the animal. These pincers made up of two clamps (61) are actuated automatically by a pneumatic cylinder (62). The cone (6) for collecting material is associated to means of vertical displacement (63), and the cone (6) is extended by a tube (64) to a connection duct (65) with a network of suction from which the specified risk material, extracted by the milling cutter (42) while moving downwards, is suctioned

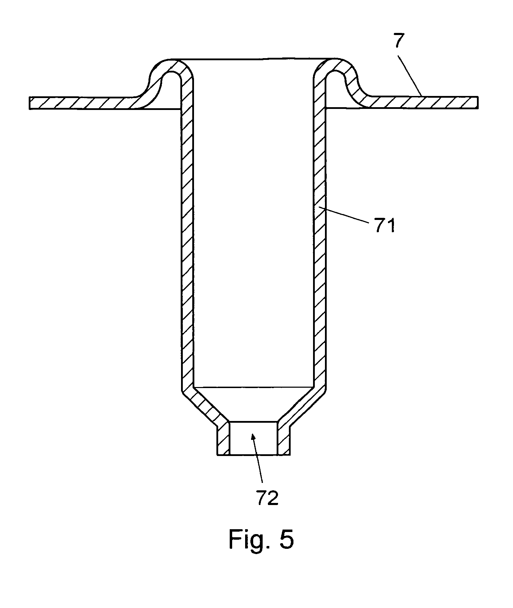

The cleaning case (3) of the means of collecting specified risk material presents an open base (31) of adequate girth to be connected to the exterior of the cone (6) for collecting material in its lower position, closing the case to avoid any water escaping. The cleaning case (3) comprises surrounding high-pressure water jets (32). These high-pressure water jets (32) conduct the cleaning and elimination of specified risk material stuck to the clamps (61) of the pincers and in the cone (6) for collecting material. In the upper part of the cleaning case (3) is an elastic membrane (7) made up of a funnel with a tubular sleeve (71) that can be connected to the animal's neck, along with the pincers, to avoid splashing. The sleeve (71) presents an opening (72) with the elastic membrane (7) as shown in figure 5.

Having described in sufficient detail the nature of the invention, and provided an example of preferential setup, it is stated for relevant purposes that the materials, shape, size and arrangement of the elements described can be modified, as long as they do not suppose an alteration of the essential features of the invention which are outlined below.

## Claims

1. Machine for extracting material classified as hazardous from the medullary canal of sheep and goats. It is of the type that comprises a vertical structure (1) carrying means for milling, with the possibility of vertical displacement, for milling the medullary canal of the animal as it moves downwards through the inside of the medullary canal, and means to collect the specified risk material, which can be connected to the animal's neck to hold it and collect the specific risk material extracted from the medullary canal during the milling operation, **characterised in that** the means for milling comprise a vertical cutter (4) associated to actuating means, and with a milling cutter (41) on the lower side with a front attachment (42) to guide it inside the medullary canal. These means for actuating the cutter (4) comprise a first motor (21) connected to the cutter (4) to give it an axial rotation movement, and a second motor (22) for the vertical displacement of a carriage (2) carrying the first motor (21) on a frame (11) attached to the upper part of the structure (1) which has, in its lower part, a cleaning case (5) for cleaning the cutter (4) as it passes through the interior of this cleaning case (5).

2. Machine, according to claim 1, **characterised in that** the means for collecting specified risk material, which can be connected to the animal's neck comprise a cone (6) for collecting the material with pincers to hold the animal's neck, connected by lower means of suction to a network of suction for the remains, and associated to means of vertical displacement (63) between an upper operative position and a lower cleaning position, in which it is arranged in the inside of the cleaning case (3).

3. Machine, according to claim 2, **characterised in that** the cleaning case (3) presents an open base (31) and an adequate girth to connect to the exterior of the cone (6) for collecting material in its lower position, and surrounding high-pressure water jets (32) for cleaning and eliminating specific risk material. In the upper part of this cleaning case (3) there is an elastic membrane (7) with an opening (72), which can be connected to the animal's neck along with the pincers to avoid splashing.

4. Machine, according to the previous claims, **characterised in that** the cutter (4) is made up of a hollow tube with holes in the side to project water towards the exterior, proceeding to clean the remains from the milling operation in the medullary canal as the milling cutter (41) moves through it. This water is supplied by a connection in the upper side of the cutter.

5. Machine, according to claim 2, **characterised in that** the pincers are made up of two clamps (61) set on a cone (6) for collecting material, and connected by a pneumatic o hydraulic cylinder (62) that opens and closes.

6. Machine, according to any of the previous claims, **characterised in that** the cleaning case (5) is made up of a receptacle with surrounding high-pressure water jets (51), aimed at the cutter, which passes through a lower collar (52) in the base of the receptacle. This base is tilted towards a side inlet (53), which is connected to a network of suction.

7. Machine, according to claim 3, **characterised in that** the elastic membrane (7) is made up of a funnel with a central tubular sleeve (71) towards the inside, in which there is an opening (72).
